# EUROPEAN PATENT APPLICATION

(11) **EP 4 694 150 A1**
(43) Date of publication of application: **11.02.2026**
(21) Application number: 25192973.3
(22) Date of filing: 30.07.2025
(51) Int. Cl.: H04N 21/454, H04N 21/472, H04N 21/482

(54) **AUTOMATIC PLAYING OF TELEVISION CONTENT IN A FEATURED CAROUSEL**

(30) Priority: 09.08.2024 US 202463681651 P
(71) Applicant: Google LLC, Mountain View, CA 94043 (US)
(72) Inventor: Staubach, Nicholas, California, 94043 (US); Li, Jingjiang, California, 94043 (US); Sanders, Branden Harrison, California, 94043 (US); Baghdassarian, Leo, California, 94043 (US); Zheng, Zirui, California, 94043 (US); Netri, 560016 Bangalore (IN); Nagaraj, Ajay Karthik Nama, 560016 Bangalore (IN); Bir, Anamika Rani, Calfornia, 94043 (US); Murthy, Rashmi, Calfornia, 94043 (US); Soundararajan, Siddharth, Calfornia, 94043 (US); Yu, Yang, Calfornia, 94704 (US)
(74) Representative: Chettle, John Edward

(57) **Abstract**

According to an aspect, a method may identify, by a television application, a plurality of live television channels providing respective television content. A method may determine a ranked order for presenting the television content for each respective live television channel of the plurality of live television channels in the featured carousel and may play the television content for a first live television channel of the plurality of live television channels in a banner in a user interface of the television application, the first live television channel being first in the ranked order. A method may receive an indication to advance the featured carousel and, in response, may play the television content for a second live television channel of the plurality of live television channels in the banner in the user interface of the television application, the second live television channel being second in the ranked order.

## Description

### CROSS-REFERENCE TO RELATED APPLICATION

This application claims priority to U.S. Provisional Patent Application No. 63/681,651, filed on August 9, 2024, entitled "AUTOMATIC PLAYING OF TELEVISION CONTENT IN A FEATURED CAROUSEL", the disclosure of which is incorporated by reference herein in its entirety.

### BACKGROUND

A television (TV) application may present various types of media content of interest to a user. The media content may have different formats such as streaming video and audio. The types of media content may include, but are not limited to, movies, television shows, sporting events, news items, short form videos, and music. In addition, or in the alternative, a variety of media content providers may deliver various types of media content for viewing by the user. The media content providers may include on-demand providers and live broadcast television program providers. The TV application may deliver a customized viewing experience to a user that spans the diverse types of media content provided by the variety of media content providers.

### SUMMARY

In some aspects, the techniques described herein relate to a method for automatically playing live television content in a featured carousel of a television application executing on a computing device, the method including: identifying, by the television application, a plurality of live television channels providing respective television content; determining a ranked order for presenting the television content for each respective live television channel of the plurality of live television channels in the featured carousel; playing the television content for a first live television channel of the plurality of live television channels in a banner in a user interface of the television application, the first live television channel being first in the ranked order; receiving an indication to advance the featured carousel; and in response to receiving the indication to advance the featured carousel, playing the television content for a second live television channel of the plurality of live television channels in the banner in the user interface of the television application, the second live television channel being second in the ranked order.

In some aspects, the techniques described herein relate to a method, further including: determining a context for the user interface; and filtering instream advertisements included in the television content based on the context.

In some aspects, the techniques described herein relate to a method, wherein filtering the instream advertisements includes replacing the instream advertisements with slate content.

In some aspects, the techniques described herein relate to a method, further including: determining a content category for the television content; and determining not to play the television content in the banner based on the content category.

In some aspects, the techniques described herein relate to a method, wherein the user interface includes a full screen button; and wherein the method further includes: receiving a selection of the full screen button when the first live television channel of the plurality of live television channels is playing; and based on receiving the selection of the full screen button, seamlessly transitioning playing of the television content for the first live television channel from the banner to a full screen state.

In some aspects, the techniques described herein relate to a method, wherein identifying a plurality of live television channels providing respective television content includes determining personalized recommendations of live television channels based on preferences of a user.

In some aspects, the techniques described herein relate to a non-transitory computer-readable medium storing executable instructions that when executed by at least one processor of a computing device cause the at least one processor to execute operations, the operations including automatically playing television content in a featured carousel of a television application executing on the computing device, the automatic playing including: identifying, by the television application, a plurality of live television channels providing respective television content; determining a ranked order for presenting the television content for each respective live television channel of the plurality of live television channels in the featured carousel; playing the television content for a first live television channel of the plurality of live television channels in a banner in a user interface of the television application, the first live television channel being first in the ranked order; receiving an indication to advance the featured carousel; and in response to receiving the indication to advance the featured carousel, playing the television content for a second live television channel of the plurality of live television channels in the banner in the user interface of the television application, the second live television channel being second in the ranked order.

In some aspects, the techniques described herein relate to a non-transitory computer-readable medium, wherein the automatic playing of the television content in the featured carousel of the television application further includes: determining a context for the user interface; and filtering instream advertisements included in the television content based on the context, the filtering including replacing the instream advertisements with slate content.

In some aspects, the techniques described herein relate to a non-transitory computer-readable medium, wherein the automatic playing of the television content in the featured carousel of the television application further includes: determining a content category for the television content; and determining not to play the television content in the banner based on the content category.

In some aspects, the techniques described herein relate to a non-transitory computer-readable medium, wherein the user interface includes a full screen button; and wherein the automatic playing of the television content in the featured carousel of the television application further includes: receiving a selection of the full screen button when the first live television channel of the plurality of live television channels is playing; and based on receiving the selection of the full screen button, seamlessly transitioning playing of the television content for the first live television channel from the banner to a full screen state.

In some aspects, the techniques described herein relate to a non-transitory computer-readable medium, wherein identifying a plurality of live television channels providing respective television content includes determining personalized recommendations of live television channels based on preferences of a user.

In some aspects, the techniques described herein relate to a system including: at least one processor; and a non-transitory computer-readable medium storing instructions that when executed by the at least one processor cause the system to automatically play television content in a featured carousel of a television application executing on a computing device, the automatic playing including: identifying, by the television application, a plurality of live television channels providing respective television content; determining a ranked order for presenting the television content for each respective live television channel of the plurality of live television channels in the featured carousel; playing the television content for a first live television channel of the plurality of live television channels in a banner in a user interface of the television application, the first live television channel being first in the ranked order; receiving an indication to advance the featured carousel; and in response to receiving the indication to advance the featured carousel, playing the television content for a second live television channel of the plurality of live television channels in the banner in the user interface of the television application, the second live television channel being second in the ranked order.

In some aspects, the techniques described herein relate to a system, wherein the automatic playing of the television content in the featured carousel of the television application further includes: determining a context for the user interface; and filtering instream advertisements included in the television content based on the context, the filtering including replacing the instream advertisements with slate content.

In some aspects, the techniques described herein relate to a system, wherein the automatic playing of the television content in the featured carousel of the television application further includes: determining a content category for the television content; and determining not to play the television content in the banner based on the content category.

In some aspects, the techniques described herein relate to a system, wherein the user interface includes a full screen button; and wherein the automatic playing of the television content in the featured carousel of the television application further includes: receiving a selection of the full screen button when the first live television channel of the plurality of live television channels is playing; and based on receiving the selection of the full screen button, seamlessly transitioning playing of the television content for the first live television channel from the banner to a full screen state.

In some aspects, the techniques described herein relate to a system, wherein identifying a plurality of live television channels providing respective television content includes determining personalized recommendations of live television channels based on preferences of a user.

In some aspects, the techniques described herein relate to a method for browsing television content in a television application executing on a computing device, the method including: presenting, by the television application, an electronic program guide in a user interface; receiving a selection of a live television channel from the electronic program guide; in response to receiving the selection, playing television content for the live television channel on a full screen of the computing device; overlaying a channel flipping icon on the television content playing on the full screen; receiving a selection of one of an up control or a down control; and based on receiving the selection of the up control, playing the television content of a next live television channel in the electronic program guide on the full screen.

In some aspects, the techniques described herein relate to a method, further including: based on receiving the selection of the down control, playing the television content of a previous live television channel in the electronic program guide on the full screen.

In some aspects, the techniques described herein relate to a method, wherein the electronic program guide lists live television channels in a ranked order based on preferences of a user.

In some aspects, the techniques described herein relate to a method, wherein the user interface includes a more channels indicator; and wherein the method further includes: receiving a selection of the more channels indicator; and based on receiving the selection, overlaying a channel hopping cluster on the television content playing on the full screen.

In some aspects, the techniques described herein relate to a method, wherein the channel hopping cluster includes a ranked order of live television channels available for playing television content represented by respective channel icons.

In some aspects, the techniques described herein relate to a method, further including: receiving a selection of a channel icon included in the channel hopping cluster; and in response to receiving the selection of the channel icon, playing the television content for the live television channel represented by the channel icon on the full screen.

The details of one or more implementations are set forth in the accompanying drawings and the description below. Other features will be apparent from the description and drawings, and from the claims.

### BRIEF DESCRIPTION OF THE DRAWINGS

FIG. 1A is an illustration of an example home screen of a television (TV) application that includes a featured carousel according to implementations described throughout this disclosure.
FIG. 1B illustrates an example of live TV content playing on a full screen in a full screen state of a TV application according to implementations described throughout this disclosure.
FIG. 2 is a block diagram of an example front end service running on a client device that a TV application may interface with when pre-fetching free television (TV) content data for presenting as a card in a featured carousel according to implementations described throughout this disclosure.
FIG. 3 is a block diagram of an example of the use of a cluster generator service executing on a server computer that may provide media content items for a featured carousel for a TV application executing on a client device according to implementations described throughout this disclosure.
FIG. 4 is a block diagram of an example process for generating live TV content for including in a featured carousel according to implementations described throughout this disclosure.
FIG. 5 is an illustration of an example user interface of a TV application that allows a user to select whether the user would like to automatically play media content items in a featured carousel of the user interface according to implementations described throughout this disclosure.
FIG. 6A is an illustration of an example user interface presented by a TV application on a screen of a network-connected display device according to implementations described throughout this disclosure.
FIG. 6B is an illustration of a user interface presented by a TV application on a screen of a network-connected display device in response to a user selection of a free TV icon according to implementations described throughout this disclosure.
Figure 7 is an illustration of an example screen presented on a network-connected display device executing a TV application in response to the selection by the user of a channel 2 icon according to implementations described throughout this disclosure
FIG. 8 is an illustration of an example screen presented on a network-connected display device executing a TV application in response to the selection by the user of a more channels indicator according to implementations described throughout this disclosure.
FIG. 9 is an illustration of an example screen presented on a network-connected display device executing a TV application in response to the selection by the user of a channel icon according to implementations described throughout this disclosure.
FIGS. 10A-B are illustrations of an example user interface for adding a live TV channel to a favorites list and an example user interface for removing a live TV channel from a favorites list, respectively, according to implementations described throughout this disclosure.
FIG. 11 is an illustration of an example client-side process for providing live TV content to a network-connected display device according to implementations described throughout this disclosure.
FIG. 12 is an illustration of an example client-side mini overlay architecture for use by a TV application when presenting a user interface for playing live TV content according to implementations described throughout this disclosure.
FIG. 13 is an illustration of an example client-side channel hopper for presenting and interacting with a channel hopping cluster according to implementations described throughout this disclosure.
FIG. 14 is an illustration of an example architecture for presenting an electronic program overlay according to implementations described throughout this disclosure.
FIG. 15 illustrates a flowchart depicting example operations for automatically playing television content in a featured carousel of a television application executing on a computing device according to implementations described throughout this disclosure.
FIG. 16 illustrates a flowchart depicting example operations for browsing television content in a television application executing on a computing device according to implementations described throughout this disclosure.

### DETAILED DESCRIPTION

A television application may provide a featured carousel of media content items. For example, when a user launches the television application the television application may play the media content items inside of a rotating carousel of media content items on the home screen of the television application. The television application may select the media content items for playing in the featured carousel based on personalized recommendations of media content for the user. In some implementations, the media content items playing in the featured carousel may be programs currently being broadcast by live television (TV) channels. In some implementations, the media content items playing in the featured carousel may be linear television content (e.g., reruns broadcast in a linear manner) by live television (TV) channels. The television application may provide the media content for the live TV channels at no additional cost to the user (e.g., for free).

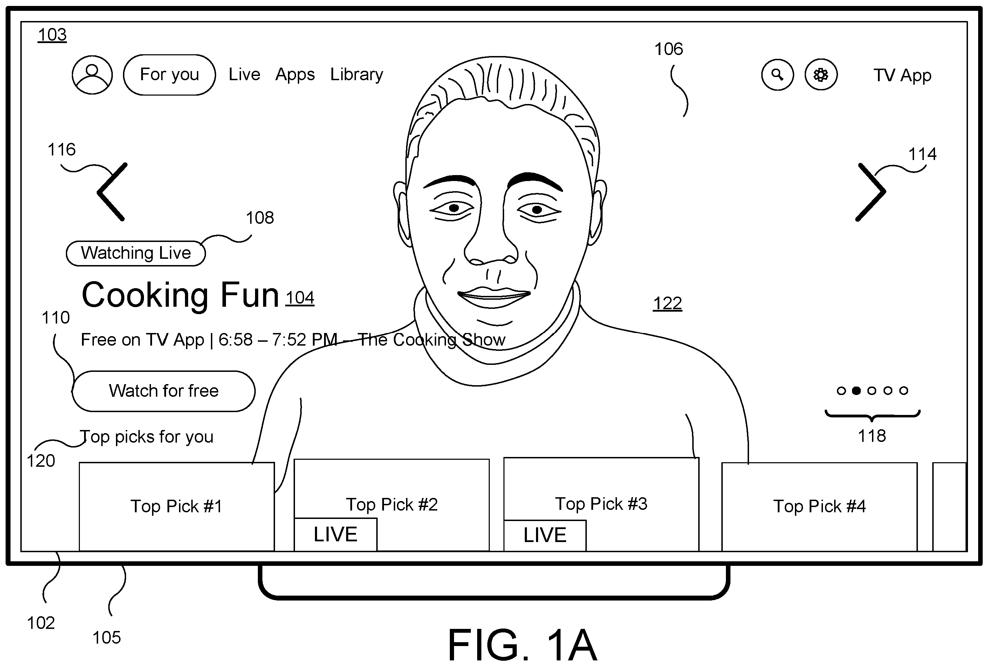

FIG. 1A is an illustration of an example home screen 102 of a television (TV) application that includes a featured carousel 106. The home screen 102 may include a user interface 103 that allows the user to interact with the TV application. In some implementations, a user may launch the TV application on a network-connected display device 105 (e.g., a smart television (TV)). The network-connected display device 105 may execute the TV application. For example, a live TV channel may currently provide live TV content as program 104. The TV application may play the program 104 titled "Cooking Fun" as a featured media content item in a banner or card 122 in the featured carousel 106 of the user interface 103. The home screen 102 may include an indicator 108 that shows that the media content item currently playing in the banner 122 in the featured carousel 106 is live and/or linear TV content. The TV application may provide the program 104 in the featured carousel 106 based on a personalized recommendation for the user.

In some implementations, the TV application may filter out instream advertisements from playing in the live and/or linear TV content based on the current context of the user interface for the TV application. For example, the TV application may play advertisements in an electronic program guide (EPG) for the TV application. In another example, the TV application may replace the advertisement in the live or linear TV content being displayed in the featured carousel with slate content. For example, the TV application may create a slate for the streaming of the live and/or linear TV content. The slate may include content that may be served when there are gaps in the stream of live and/or linear TV content during an advertisement break that cannot be filled with a dynamically served advertisement.

In some implementations, the TV application may determine not to allow the automatic playing of live and/or linear TV content in the featured carousel based on a category associated with the live and/or linear TV content. For example, the TV application may determine not to auto play live and/or linear TV content of a certain rating (e.g., "R" or "TV-MA"). In another example, the TV application may determine not to autoplay live and/or linear TV content based on the source of the content (e.g., the live TV channel, the streaming service provider). In these examples, the TV application may provide a static image or banner in the featured carousel in place of auto playing the live and/or linear TV content. In some examples, the static image or banner may represent the live and/or linear TV content. In some examples, the static image or banner may represent the live TV channel.

In some implementations, the auto playing of live and/or linear TV content in the featured carousel 106 may continue for a predetermined amount of time (e.g., two hours, four hours, etc.). For example, the TV application may allow the user to set or select an amount of time for the auto playing of the live and/or linear TV content in the featured carousel 106 by entering the time in a settings option in the settings for the TV application.

The TV application may control the advancing of the media content playing in the featured carousel 106. In some implementations, the TV application may automatically advance the media content playing in the featured carousel. Referring to FIG. 1A, in some implementations in addition or in the alternative, a user may select a forward arrow 114 to advance or go ahead to the next media content item (the next live and/or linear TV content playing or broadcast by a next live TV channel) in the featured carousel 106 for playing in the banner 122 on the home screen 102. Referring to FIG. 1A, in some implementations in addition or in the alternative, a user may select a backward arrow 116 to rewind or go back to the previous media content item (previous live and/or linear TV content playing or broadcast by a previous live TV channel) in the featured carousel 106 for playing in the banner 122 on the home screen 102. The TV application can update a featured carousel indicator 118 to indicate the location of the media content item currently playing in the banner 122 in the featured carousel 106 relative to the other media content items in the featured carousel.

In some implementations, the TV application may allow the user to set or select an amount of time for playing each media content item in the featured carousel of media content items. For example, the TV application may autoplay a media content item in the featured carousel for an amount of time set or selected by the user (e.g., 15 seconds, 30 seconds, 45 seconds, one minute, etc.) before advancing to the next media content item in the featured carousel. The TV application may then play the following media content item for the amount of time set or selected by the user before advancing to the next media content item. In some implementations, once the TV application finished playing all of the media content items in the featured carousel, the TV application may advance to the first media content item in the featured carousel and play the media content item, advancing to the next media content item essentially replaying the media content items in the featured carousel.

In some implementations, the TV application may determine that the user focus is on the media content item playing in the featured carousel. In these implementations, the TV application may not auto advance to the next media content item in the feature carousel. For example, the TV application may play the current media content item in the featured carousel for an amount of time longer than the amount of time set for the TV application to play the media content item when auto playing the media content item in the featured carousel. The TV application may do so because the user is focused on the media content item as it is playing in the featured carousel. In addition, or in the alternative, the audio component of the media content item playing in the featured carousel may vary depending on the focus of the user. For example, if the user is focused on the media content item playing in the featured carousel, the TV application may increase the volume of the audio for the media content item. In another example, if the user is not focused on the playing of the media content item in the featured carousel, the TV application may reduce or mute the volume of the audio for the media content item in addition to auto advancing to the next media content item in the featured carousel.

During the auto playing of media content items in the featured carousel, if a program that is a live TV broadcast ends, the TV application may continue to auto play live and/or linear TV content for the broadcast TV channel if the media content item being broadcast is deemed suitable for playing in the featured carousel based on the criteria discussed herein.

The TV application may determine that a user has been inactive (e.g., the user has not interacted with the TV application) for a predetermined amount of time (e.g., 5 minutes, 10 minutes, 30 minutes, one hour). For example, the TV application may allow the user to set or select an amount of time that passes before the TV application considers the user inactive by entering the time in a settings option in the settings for the TV application. If the TV application considers the user inactive, the TV application may enter an ambient mode of operation. For example, the TV application operating in the ambient mode may stop auto playing media content items in the featured carousel and allow the network-connected display device (e.g., a smart TV) to enter an ambient mode of operation to prevent screen burn-in.

In some implementations, the media content items available for playing in the featured carousel may be content currently being broadcast by live TV channels. In some implementations, the media content items available for playing in the featured carousel may be select on demand content in addition to live and/or linear TV content.

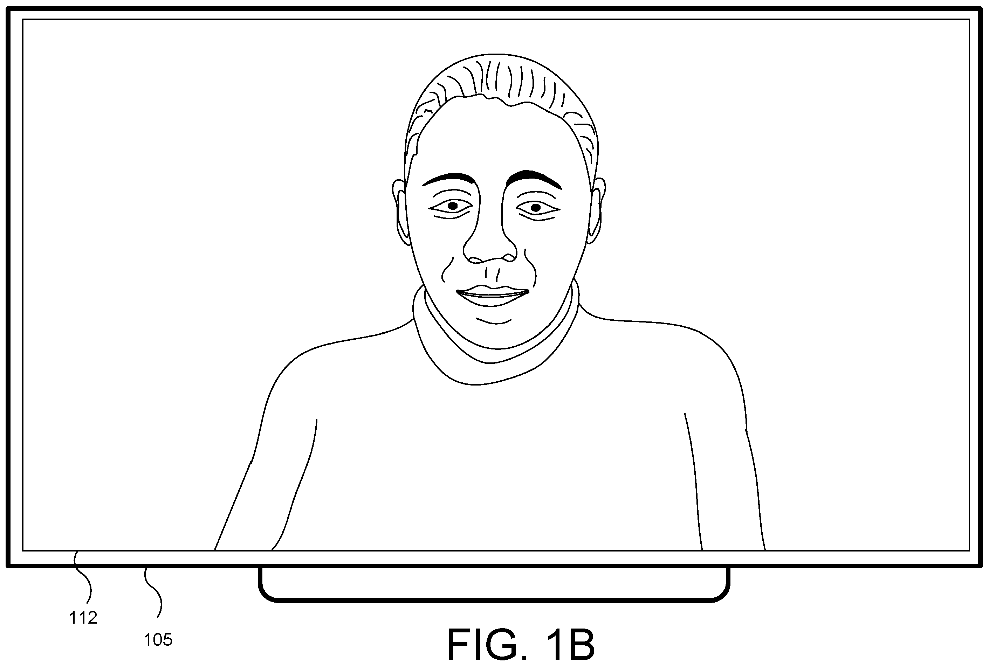

In some implementations, referring to FIG. 1A, a user may select or click on a watch for free button 110. The user may select the watch for free button 110 as the live and/or linear TV content is playing on the home screen 102 in the banner 122 in the featured carousel 106. In response to the selection of the watch for free button 110, the TV application may seamlessly transition the streaming of the live and/or linear TV content from playing on the home screen 102 of the TV application in the banner 122 in the featured carousel 106 to playing on a full screen 112 of a full screen state of the TV application as shown in FIG. 1B.

In some implementations, referring to FIG. 1A, after a predetermined period of time (e.g., five seconds, ten seconds, fifteen seconds, twenty seconds, 30 seconds), the TV application may seamlessly transition the streaming of the live and/or linear TV content from playing on the home screen 102 of the TV application in the banner 122 in the featured carousel 106 to playing on the full screen 112 of the full screen state of the TV application as shown in FIG. 1B. In these implementations, the TV application would automatically enter the full screen state after a predetermined amount of time without the user having to click on or select the watch for free button 110.

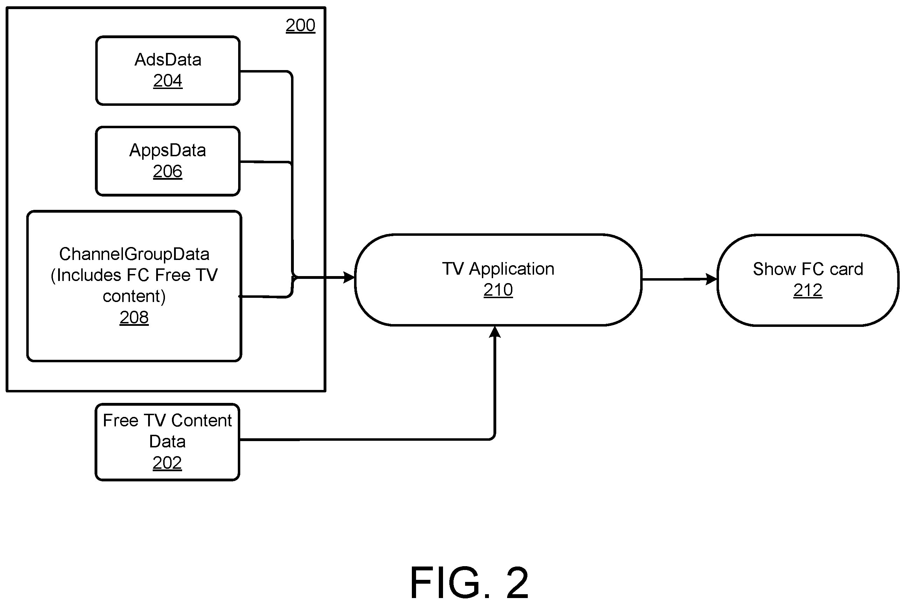

FIG. 2 is a block diagram of an example front end service 200 running on a client device that a TV application 210 may interface with when pre-fetching free television (TV) content data for presenting as a card in a featured carousel (e.g. show feature carousel card 212) according to implementations described throughout this disclosure. Referring to FIG. 1A, the TV application 210 may pre-fetch the free TV content data 202 when the information and data for presenting in a Top Picks For You 120 section of the home screen 102 is loading. The pre-fetching of the free TV content data 202 in parallel with the loading of the information and data for presenting in a Top Picks For You 120 section allows for faster loading of free TV content data 202 when auto playing cards or banners 122 in the featured carousel 106. As shown in FIG. 2, the TV application 210 may load advertisement (ads) data 204, application data 206, and channel group data 208 for presenting on the home screen 102 of the TV application 210. For example, the channel group data 208 may include information and data for free TV channels available to the user of the TV application 210. The channel group data 208 may include free TV content that may be included in the featured carousel 106.

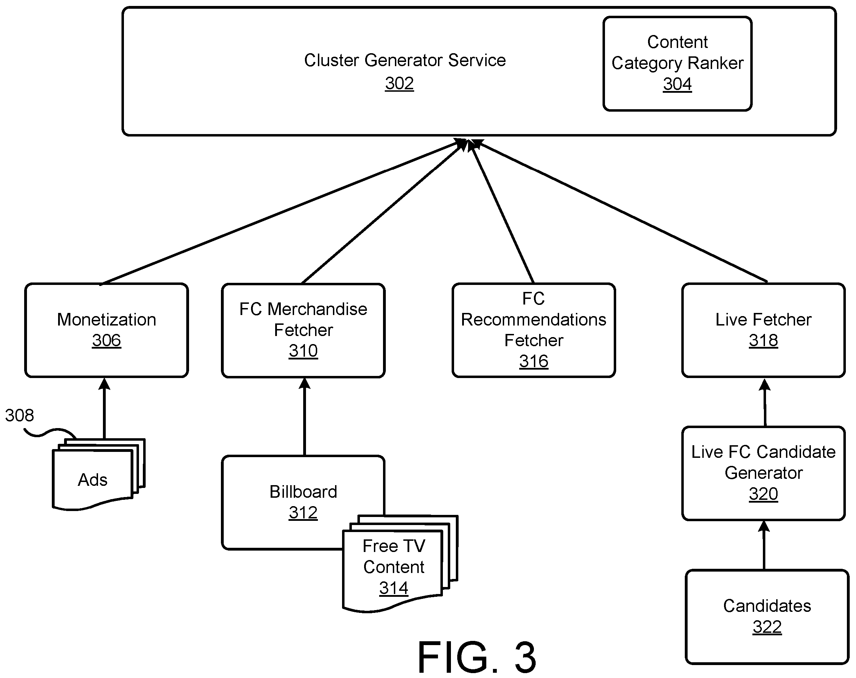

In some implementations, a client may interface with a server that includes a server-side TV application that interfaces with the TV application executing on the client device. FIG. 3 is a block diagram of an example of the use of a cluster generator service 302 executing on a server computer that may provide media content items for a featured carousel for a TV application executing on a client device. For example, a server-side TV application may interface with the cluster generator service 302 to provide a ranked order of recommended personalized media content items for inclusion in a featured carousel provided by a TV application executing on a client device. For example, the client device may be a network-connected display device (e.g., network-connected display device 105) that may be communicatively coupled to the server by way of a network. The network-connected display device may execute the TV application. In a nonlimiting example, the network-connected display device may be a television set (e.g., a smart TV).

The cluster generator service 302 may include a content category ranker 304. The content category ranker 304 may rank content for presenting in a user interface of the TV application executing on a client device based on the category of the content (e.g., advertisement, merchandise, live and/or linear TV content, etc.).

A monetization module 306 may obtain or fetch one or more advertisements 308. The monetization module 306 may provide the advertisements 308 to the cluster generator service 302. In some implementations, the cluster generator service 302 may include the advertisements 308 in the featured carousel. In some implementations, the cluster generator service 302 may provide the advertisements 308 to the server-side TV application. The server-side TV application may provide the advertisements 308 to the TV application executing on the client device for inclusion in a user interface of the TV application (e.g., the home screen).

A featured carousel merchandise fetcher 310 may obtain a billboard 312 representative of merchandise shown, for example, on live and/or linear TV content. The featured carousel merchandise fetcher 310 may provide the billboard 312 to the cluster generator service 302 for inclusion in the featured carousel. For example, the billboard 312 may be an image representative of merchandise a user may be interested in purchasing. In another example, the billboard 312 may include information and/or a link to a web page that a user may access to purchase the merchandise. The billboard 312 may access free TV content 314.

A featured carousel recommendations fetcher 316 may fetch or obtain media content recommendations from, for example, a recommendation engine included on the server. The recommendations may be for media content items for inclusion in the featured carousel. As described, in some implementations, the media content items may be live and/or linear TV content available for viewing by the user. In some implementations, the media content items may include both live and/or linear TV content and on-demand content.

A live fetcher 318 may fetch or obtain live TV media content items from a live featured carousel candidate generator 320. The live featured carousel candidate generator 320 may receive media content from a variety of sources and inputs (e.g., candidates 322) for use in generating a live TV candidate for providing to the live fetcher 318 for inclusion in a featured carousel.

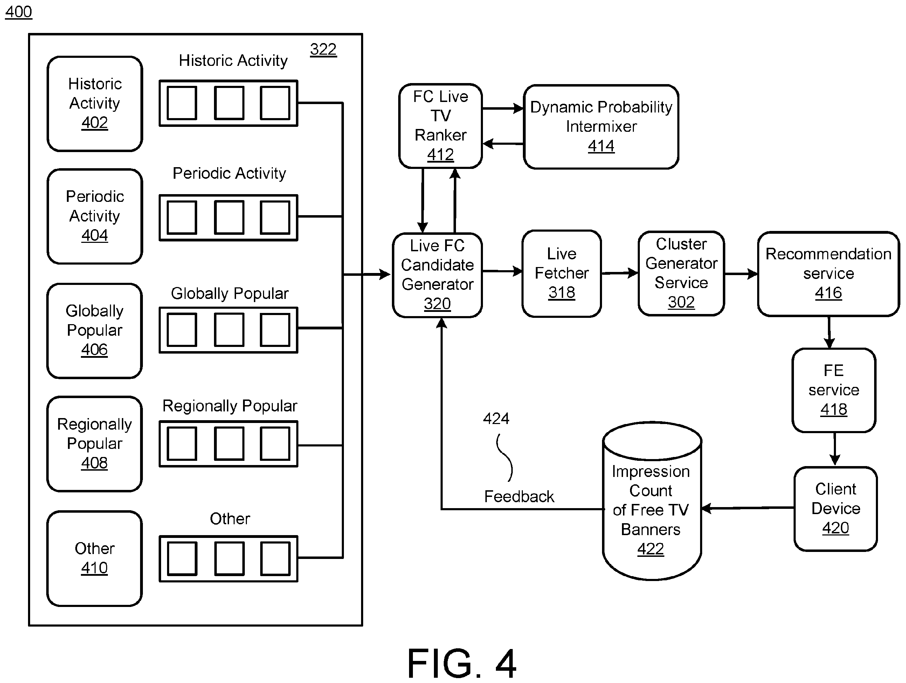

FIG. 4 is a block diagram of an example process for generating live and/or linear TV content for including in a featured carousel (e.g., a live featured carousel generation process 400). The live featured carousel candidate generator 320 may receive candidates for use in determining media content items for inclusion in a featured carousel for a user from a variety of candidate inputs that may be based on historic activity 402 (e.g., channels recently watched by the user), and/or periodic activity 404 (e.g., recurring programs and/or channels watched by the user). In addition, or in the alternative, The live featured carousel candidate generator 320 may receive candidates for use in determining media content items for inclusion in a featured carousel for a user from a variety of candidate inputs that may include, but are not limited to, globally popular media content items 406 (e.g., channels most frequently watched by a majority of users), regionally popular media content items 408 (e.g., broadcast TV channels within a geographic area of the user), and other media content items 410 (e.g., media content item candidates provided by a server-side recommendation engine).

The live featured carousel candidate generator 320 interfaces with a featured carousel live TV ranker 412 that ranks media content items provided by the recommended candidates. The featured carousel live TV ranker 412 interfaces with a dynamic probability intermixer 414 when ranking the live TV candidates for inclusion in the featured carousel. As shown in FIG. 3, the live featured carousel candidate generator 320 provides the generated candidates to the live fetcher 318 that obtains or fetches the media content item for the candidate. The live fetcher 318 may provide the candidate media content items to the cluster generator service 302 for inclusion in the featured carousel. The cluster generator service 302 may provide the ranked list of media content items for inclusion in a featured carousel.

The live featured carousel generation process 400 may provide feedback 424 to the live featured carousel candidate generator 320 for use in determining future candidates based on, for example, an interaction of the user with currently provided live TV media content in the featured carousel. The cluster generator service 302 may interface with a recommendation service 416. The recommendation service 416 may interface with a feature engagement service 418 that interfaces with a client device 420. The client device (e.g., a television, a network-connected display device, a smart TV) may execute a TV application that presents the featured carousel to a user. The feature engagement service 418 may facilitate the gathering of impression counts of free TV banners for inclusion in a database 422. For example, the feature engagement service 418 may determine if and how often the user clicks on or selects a live TV media content item playing in a banner (or card) in the featured carousel. In another example, the feature engagement service 418 may determine the live TV media content item selected by the user from the featured carousel.

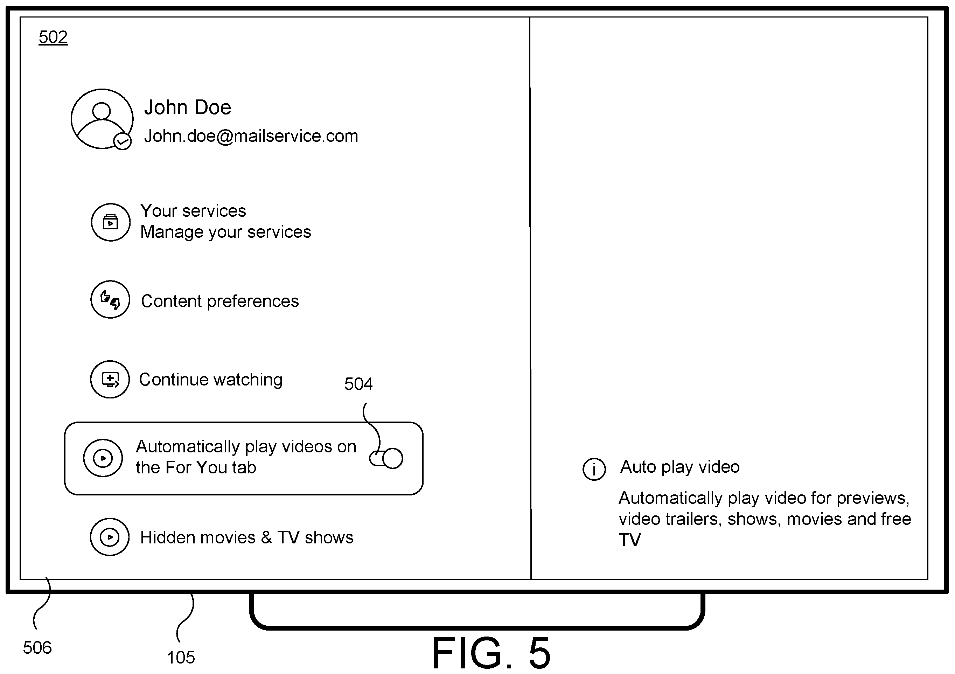

FIG. 5 is an illustration of an example user interface 502 in a settings screen 506 of a TV application that allows a user to select whether or not the user would like to automatically play media content items in a featured carousel of the user interface. For example, a user may click on, select, or toggle an auto play video switch 504 to select or deselect automatically playing media content items in a featured carousel of the user interface on the For You tab.

While watching the live and/or linear TV content on the full screen, the user may want to browse additional available live and/or linear TV content for watching. In some implementations, the TV application may present a user interface to the user that includes an electronic program guide (EPG). The EPG may list channels available for the user to watch free live and/or linear TV content and information (e.g., a title, a program name) about the available live and/or linear TV content.

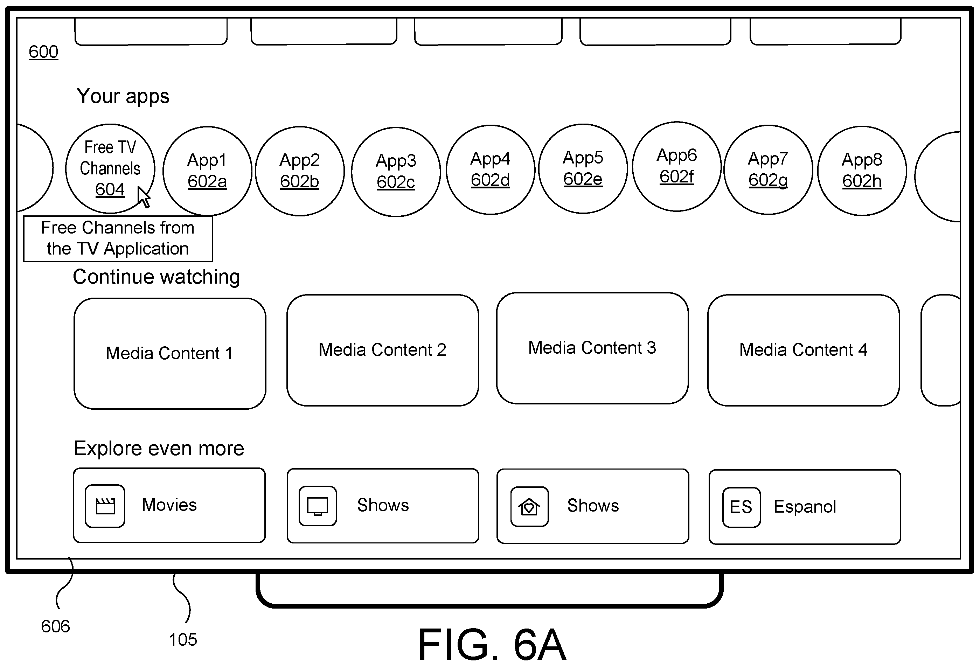

FIG. 6A is an illustration of an example user interface 600 presented by a TV application on a screen 606 of a network-connected display device (e.g., the network-connected display device 105). For example, the user interface 600 may be part of a home screen that the TV application presents to the user when the user launches the TV application. The user interface 600 may include one or more icons 602a-h. Each icon 602a-h may be associated with a respective media content provider. The user may click on or select an icon to launch an application for the media content provider. In addition, or in the alternative, the user interface 600 may include a free TV channels icon 604. The user may click on or select the free TV channels icon 604 to access free live and/or linear TV content broadcast from live TV channels.

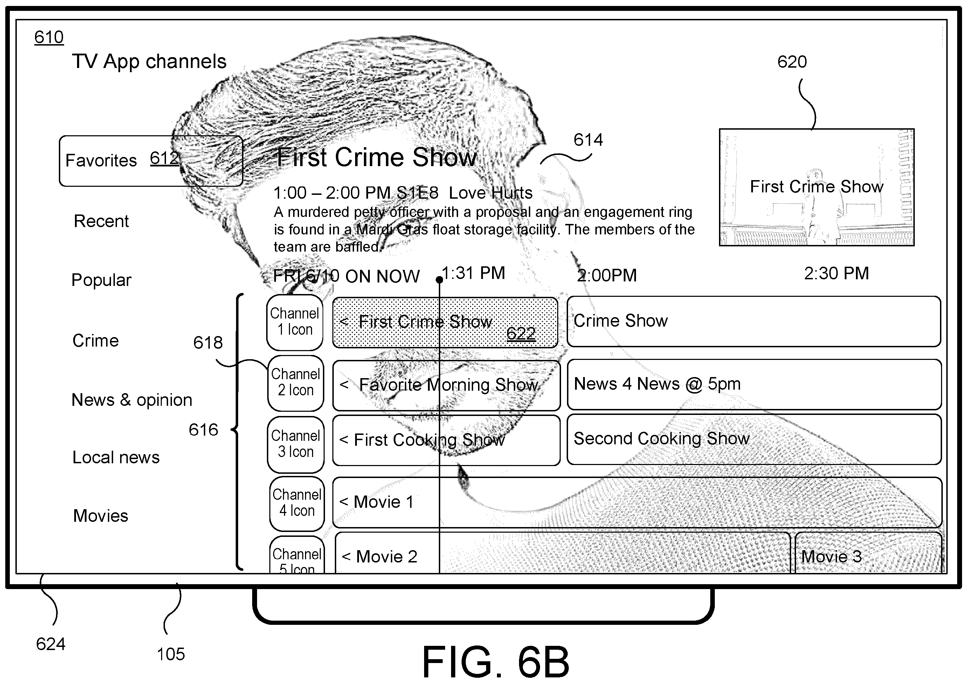

FIG. 6B is an illustration of a user interface 610 presented by a TV application on a screen 624 of a network-connected display device (e.g., the network-connected display device 105) in response to the user selection of the free TV channels icon 604 on a screen of a television. The user interface 610 may present an electronic program guide 614. The user may click-on or select a favorites indicator 612. In response to the selection of the favorites indicator 612, the TV application may present a free TV channel listing 616 in the electronic program guide 614. The TV application may present the channels in the free TV channel listing 616 that are considered favorite channels for watching by the user. In addition, or in the alternative, the TV application may present the channels in a ranked order, the most favored channel of the user being first in the listing and lesser favored channels being listed in order of favoritism next in the listing. The free TV channel listing 616 may include favorite channels for the user. A client device executing the TV application may interface with a server. The server may identify free TV channels watched by and/or preferred by the user.

The user interface 610 may include a static image that represents the currently playing media content item (e.g., the current TV show being broadcast (e.g., TV show 620)) of the channel in focus (e.g., channel 1) in a channel preview window 620. For example, the channel preview window 620 includes a static image that represents the media content item playing now on channel 1 (e.g., first crime show 622). In addition, or in the alternative, the TV application may play the media content item of the channel in focus (e.g., the first crime show 622) on the screen 624 in a full screen mode in the background of the user interface 610.

A user may review the free TV channel listing 616 and decide to watch the free TV content currently being played or broadcast on channel 2. The user may click on or select a channel icon (e.g., channel 2 icon 618).

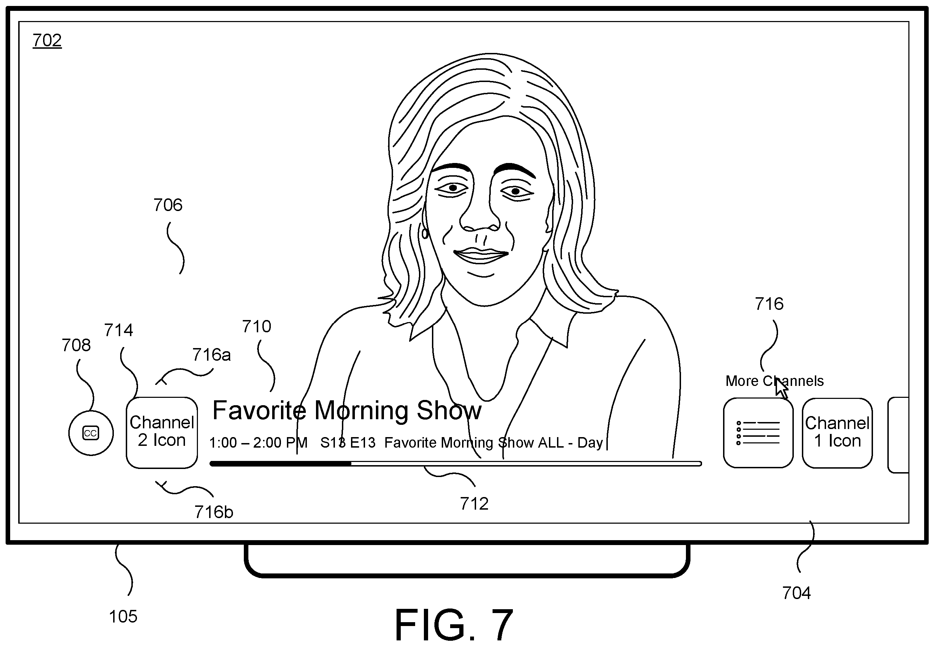

Figure 7 is an illustration of an example screen 702 presented on a network-connected display device 704 executing a TV application in response to the selection by the user of the channel 2 icon 618. The screen 702 may include a user interface 706. The user interface 706 may include a closed captioning button 708. For example, the user may toggle the closed captioning button 708 to turn closed captioning on and off for the media content item being presented in the screen 702. The user interface 706 may include a media content item status indicator 710. The media content item status indicator 710 may present information about the media content item being presented in the screen 702 such as a title, a duration time, a current playing time, and other information about the media content item. In addition, or in the alternative, the media content item status indicator may present an interactive slide indicator 712. The interactive slide indicator 712 may show a visual representation of the current playing time of the media content item on the screen 702. In addition, or in the alternative, a user may interact with the interactive slide indicator 712 to advance or forward the playing of the media content item and/or to rewind or reverse the playing of the media content item.

In addition, or in the alternative, the TV application may present a channel flipping icon 714 with associated up and down controls (e.g., up control 716a and down control 716b) that allows the user to perform single click or one-click channel flipping or changing while the user is watching live and/or linear TV content (e.g., the media content item presented on the screen 702). For example, the one-click channel flipping may allow the user to change or switch between live TV channels by a single click on the controls 716a-b. For example, referring to FIG. 6B, the user may single click on the down control 716b to change channels from channel 2 to channel 3. Once the channel is changed, the TV application may present the media content item currently being played or broadcast by channel 3 on the screen 702. In another example, referring to FIG. 6B, the user may single click on the up control 716a to change channels from channel 2 to channel 1. Once the channel is changed, the TV application may present the media content item currently being played or broadcast by channel 1 on the screen 702. The ability for the user to perform one-click channel flipping allows the user to easily browse live and/or linear TV content provided by the TV application without having to return to the electronic program guide, for example, as shown in FIG. 6B.

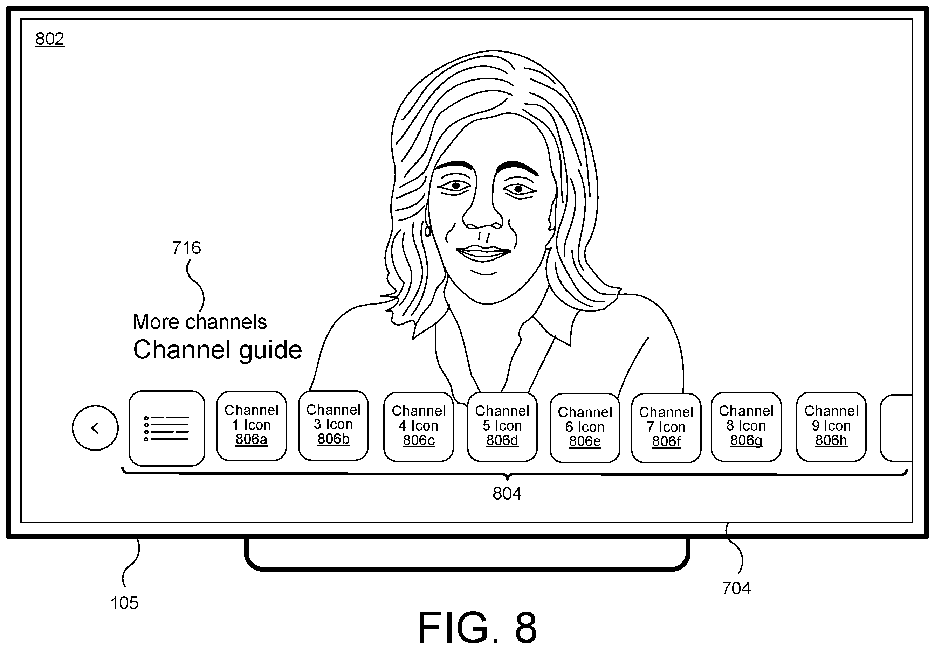

In addition, or in the alternative, a user may interact with a channel hopping cluster to flip between or change channels while watching live and/or linear TV content without having to return to the electronic program guide. For example, the user may click on or select a more channels indicator 716 to expand the channel hopping cluster. FIG. 8 is an illustration of an example screen 802 presented on the network-connected display device 704 executing a TV application in response to the selection by the user of the more channels indicator 716. As shown in FIG. 8, the user may continue to watch the live and/or linear TV content on the screen 802 while viewing other channel options in a channel hopping cluster 804. The channel hopping cluster 804 may include personalized recommendations for the user as recommended live TV channels represented by channel icons 806a-h in the channel-hopping cluster. The user may select or click on a channel icon in the channel hopping cluster 804 to change to or switch to the live TV channel associated with the channel icon. Once the TV application switches to the selected live TV channel, the TV application may present the live and/or linear TV content being played or broadcasted by the selected live TV channel on the screen 802.

Referring also to FIG. 7, a user may easily switch between live TV channels while watching live and/or linear TV content without having to exit the live TV player of the TV application by interacting with the controls associated with the channel flipping icon 714 (e.g., the up control 716a and the down control 716b) and/or by interacting with the channel hopping cluster 804. Both options involve a single-click by the user on either the up control 716a, the down control 716b, or on a channel icon allows the user to perform single click or one-click channel flipping or changing while the user is watching live and/or linear TV content (e.g., the media content item presented on the screen 702). The personalized channel recommendations presented in the channel hopping cluster 804 may allow a user to browse and launch other live TV channels without leaving or exiting the live TV player of the TV application and without pausing or stopping the viewing of currently selected live and/or linear TV content on the screen 802. The personalized channel recommendations in the live TV player view may present the representative channel icons 806a-h for the live TV channels in the channel hopping cluster 804 without covering or obscuring large areas of the full screen live TV player playing the live and/or linear TV content on the screen 802. The personalized channel recommendations presented in the live TV player view may be presented in the channel hopping cluster 804 without presenting a complete electronic program guide.

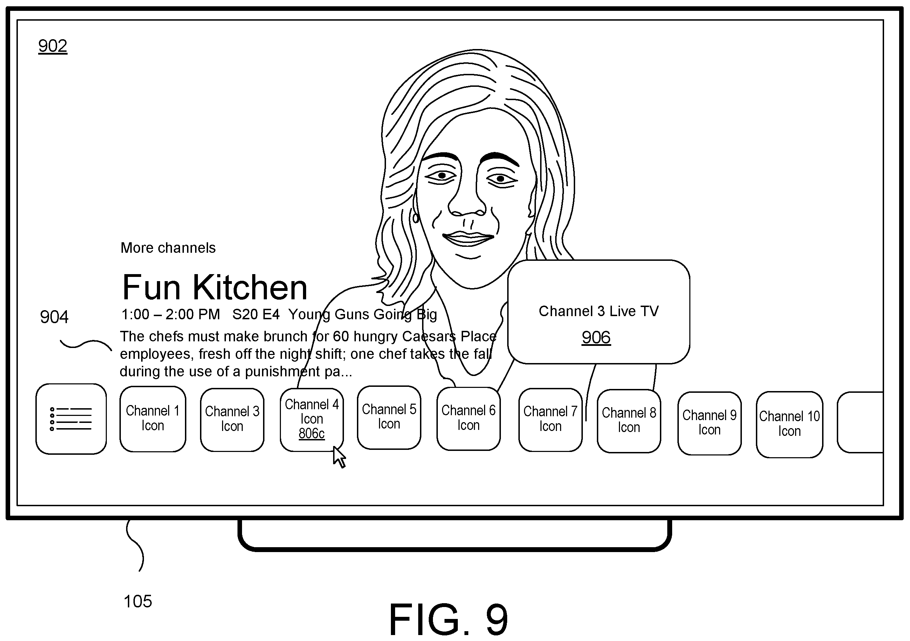

FIG. 9 is an illustration of an example screen 902 presented on the network-connected display device 704 executing a TV application in response to the selection by the user of the channel icon 806c. For example, referring to FIG. 8, while the user is watching the live and/or linear TV content playing on the screen 802, the user may select or click on the channel icon 806c. In response to the selection of the channel icon 806c, the TV application may present the live and/or linear TV content currently playing on the live TV channel associated with the channel icon 806c (e.g., channel 3) in a preview window 906. In addition, or in the alternative, the TV application may present information about the live and/or linear TV content currently playing on the selected channel (e.g., channel 3) in a summary section 904. For example, the user may decide to flip or change the live TV channel from channel 1 whose live and/or linear TV content is playing on the screen 902 to channel 3 by clicking on or selecting the preview window 906. In response, the TV application will present the live and/or linear TV content being played or broadcast on channel 3 in a full screen mode of the screen of the network-connected display device 704.

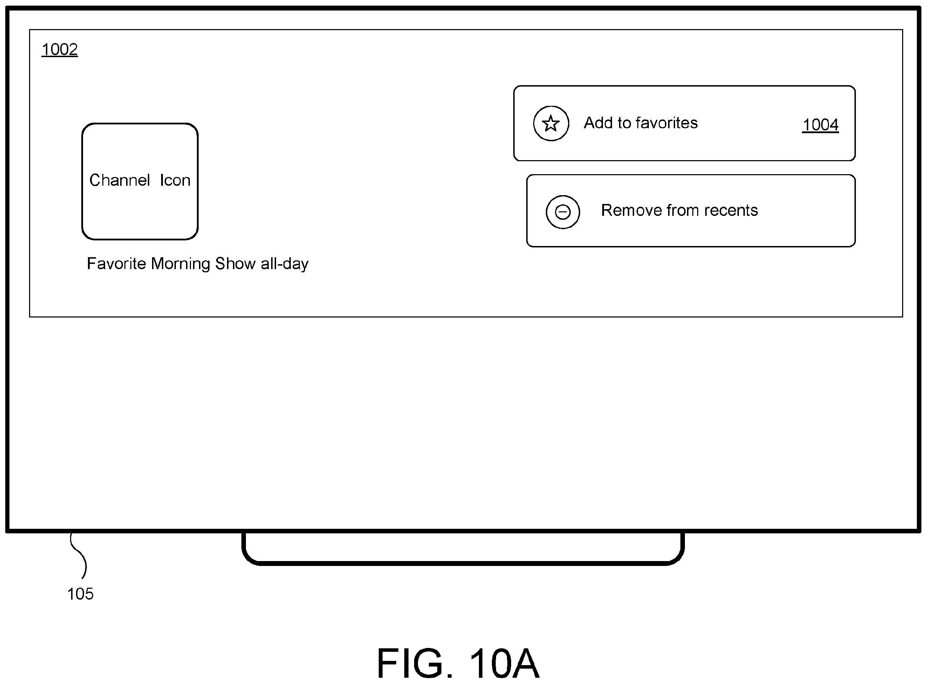

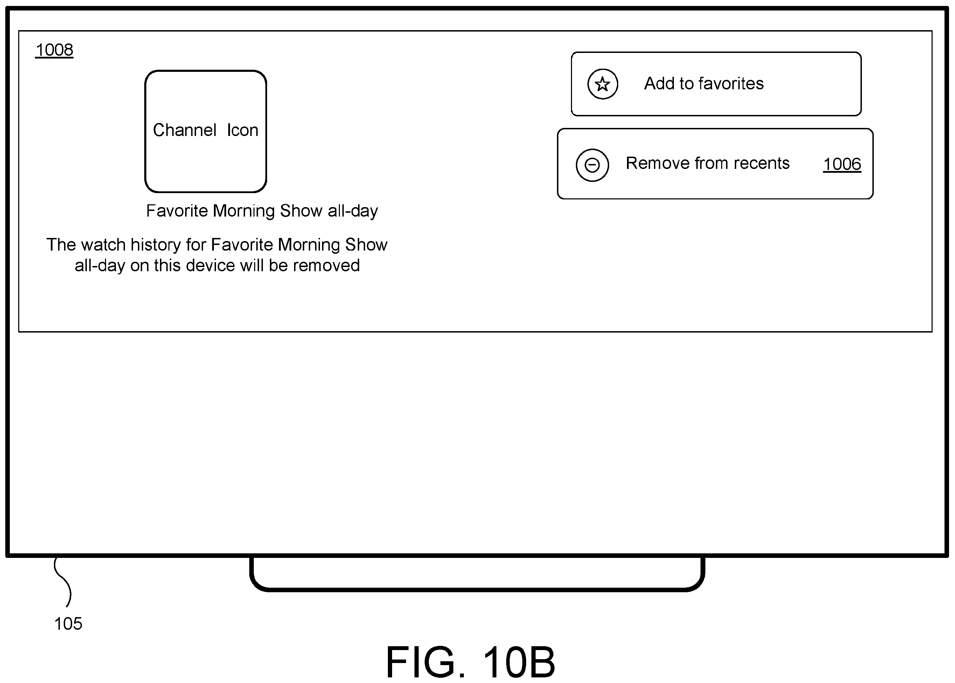

FIGS. 10A-B are illustrations of an example user interface 1002 for adding a live TV channel to a favorites list and an example user interface 1008 for removing a live TV channel from a favorites list, respectively. For example, referring to FIG. 8, the TV application may present a free TV channel listing 616 in the electronic program guide 614 of live TV channels that is a favorites list based on the selection of the favorites indicator 612. In some implementations, referring to FIGS. 8 and 9, a user may interact with the channel icons 806a-h in the channel hopping cluster 804 in a manner that results in the TV application presenting the user interface 1002 that allows the user to select to add the channel to the favorites list by selecting or clicking on the add to favorites button 1004 or to select to remove the channel from a recent list by selecting the remove from recents button 1006.

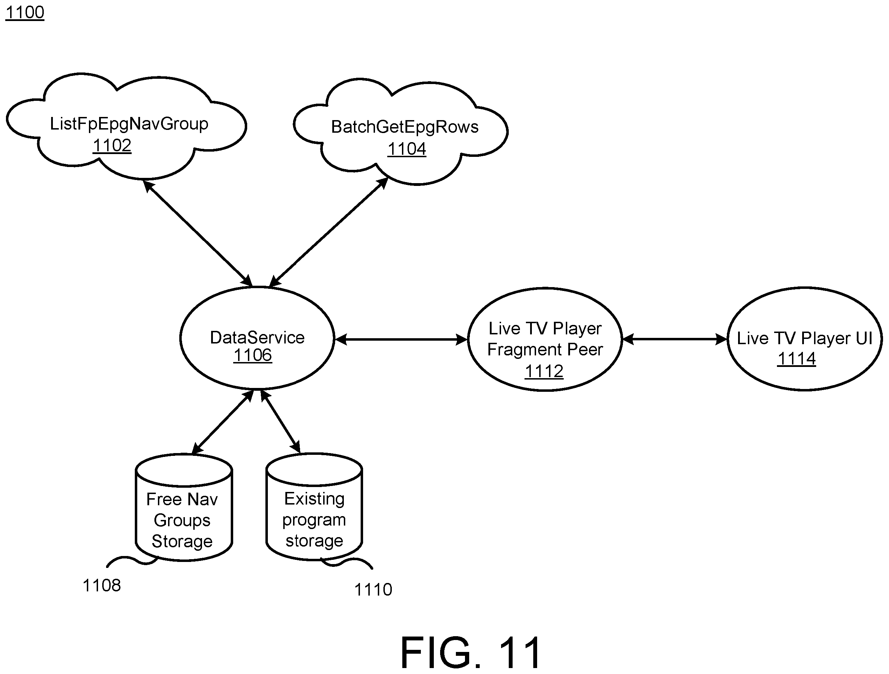

FIG. 11 is an illustration of an example client-side process 1100 for providing live and/or linear TV content to a network-connected display device (e.g., a smart TV). A TV application may use a data service to present live and/or linear TV content as described herein. In some implementations, the data service 1106 may use a first remote procedure call 1102 to get a list of categories for free live TV playing. The data service 1106 may use a second remote procedure call 1104 when providing information and data for the presenting of an electronic program guide. The data service 1106 may interface with a free TV navigation groups repository 1108 and an existing program repository 1110. The data service 1106 interfaces with a live TV player fragment peer 1112 which interfaces with a live TV player user interface 1114 to present live and/or linear TV content to a user.

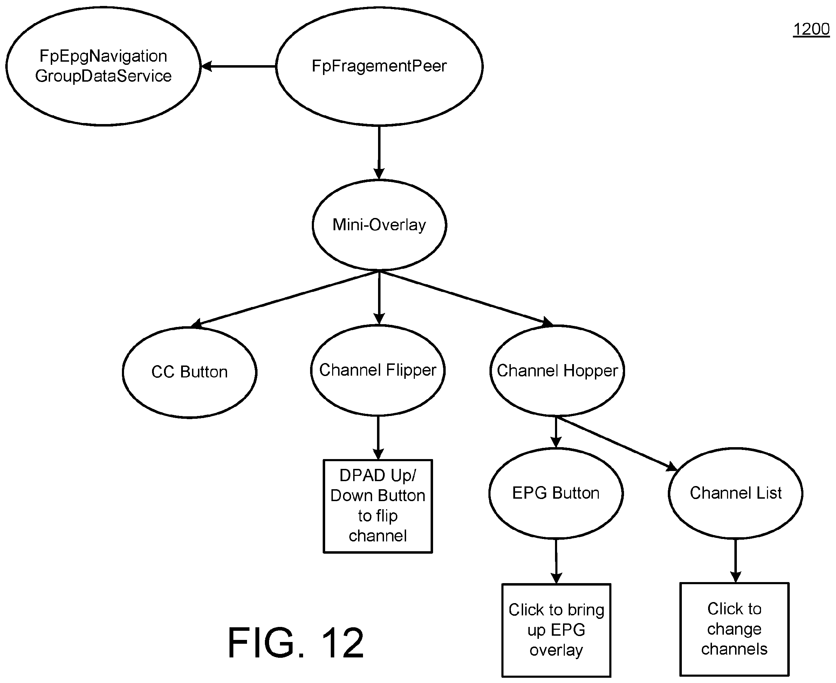

FIG. 12 is an illustration of an example client-side mini overlay architecture 1200 for use by a TV application when presenting a user interface for playing live and/or linear TV content. In some implementations, a client-side process for presenting user interfaces for interacting with the playing of live and/or linear TV content as described here may include, but is not limited to, six workflows: a splash screen, a mini-overlay, an electronic programming guide overlay, a favorites listing, a recents listing, a data service, and why this advertisement (WTA).

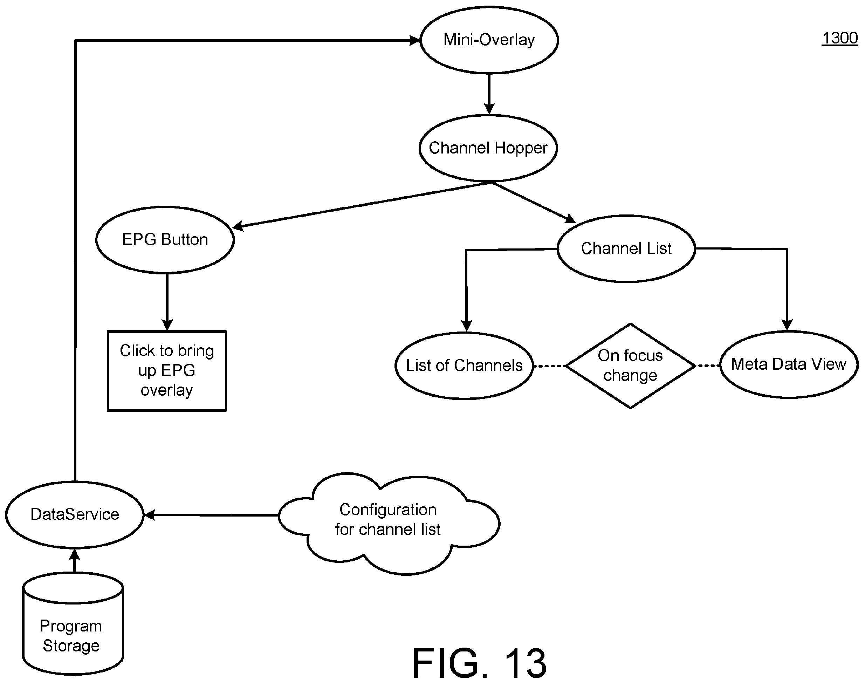

FIG. 13 is an illustration of an example client-side channel hopper 1300 for presenting and interacting with a channel hopping cluster 804. For example, referring to FIGS. 8 and 9, the channel hopper may include a list of channels that a user can easily access in the channel hopping cluster 804. The TV application may present a list of channels from a top of a recents block of the EPG to a configurable value down.

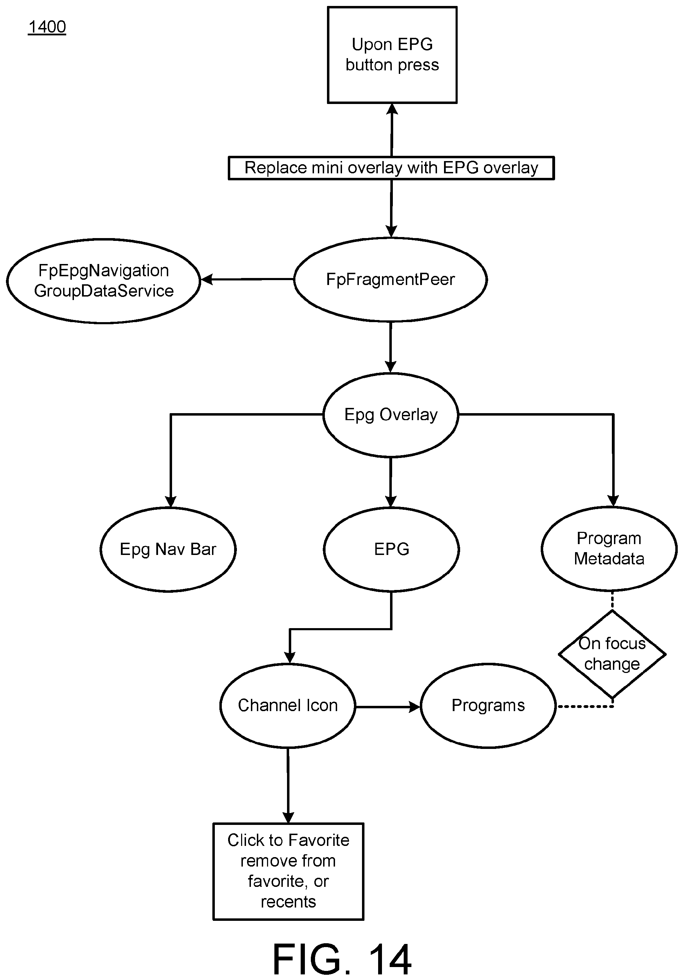

FIG. 14 is an illustration of an example architecture 1400 for presenting an electronic program overlay as described herein.

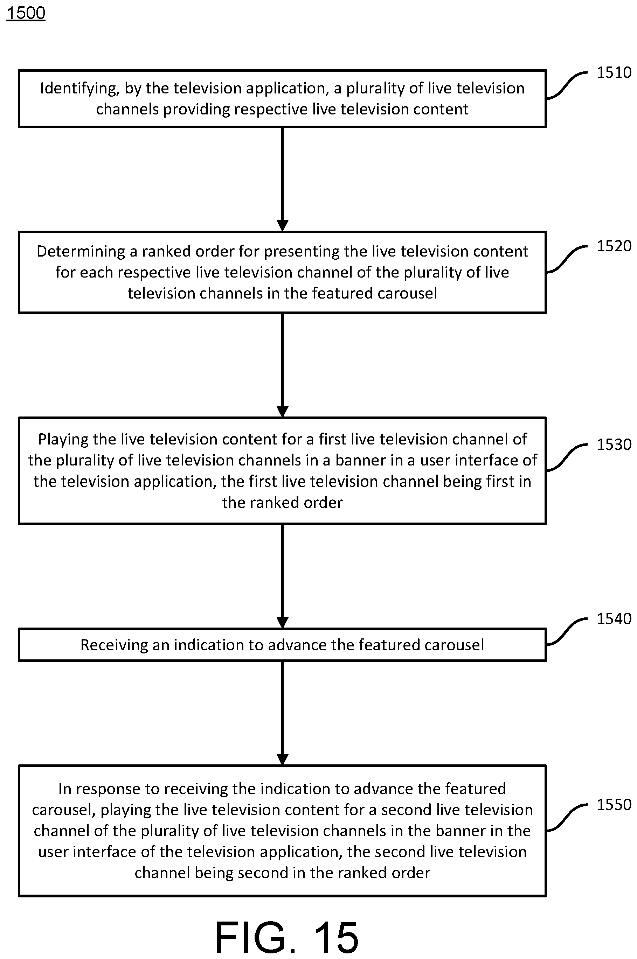

FIG. 15 illustrates a flowchart 1500 depicting example operations for automatically playing television content in a featured carousel of a television application executing on a computing device according to implementations described throughout this disclosure. Although the flowchart 1500 of FIG. 15 illustrates the operations in sequential order, it will be appreciated that this is merely an example, and that additional or alternative operations may be included. Further, operations of FIG. 15 and related operations may be executed in a different order than that shown, or in a parallel or overlapping fashion. The operations may define a computer-implemented method. The flowchart 1500 may be executed according to any of the figures discussed herein.

Operation 1510 includes identifying, by the television application, a plurality of live television channels providing respective television content.

Operation 1520 includes determining a ranked order for presenting the television content for each respective live television channel of the plurality of live television channels in the featured carousel.

Operation 1530 includes [playing the television content for a first live television channel of the plurality of live television channels in a banner in a user interface of the television application, the first live television channel being first in the ranked order.

Operation 1540 includes receiving an indication to advance the featured carousel.

Operation 1550 includes in response to receiving the indication to advance the featured carousel, playing the television content for a second live television channel of the plurality of live television channels in the banner in the user interface of the television application, the second live television channel being second in the ranked order.

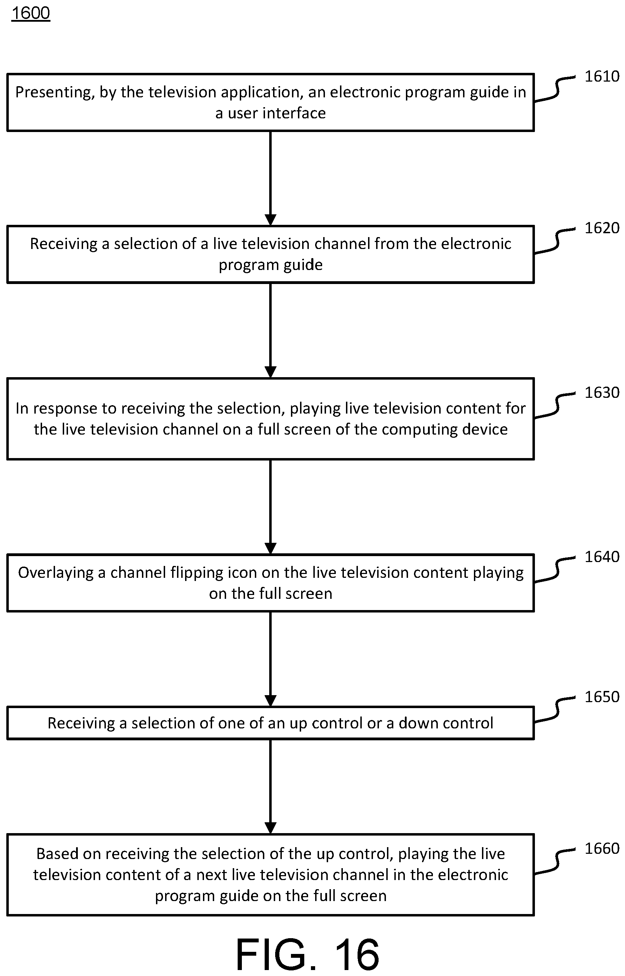

FIG. 16 illustrates a flowchart 1600 depicting example operations for browsing television content in a television application executing on a computing device according to implementations described throughout this disclosure. Although the flowchart 1600 of FIG. 16 illustrates the operations in sequential order, it will be appreciated that this is merely an example, and that additional or alternative operations may be included. Further, operations of FIG. 16 and related operations may be executed in a different order than that shown, or in a parallel or overlapping fashion. The operations may define a computer-implemented method. The flowchart 1600 may be executed according to any of the figures discussed herein.

Operation 1610 includes presenting, by the television application, an electronic program guide in a user interface.

Operation 1620 includes receiving a selection of a live television channel from the electronic program guide.

Operation 1630 includes in response to receiving the selection, playing television content for the live television channel on a full screen of the computing device.

Operation 1640 includes overlaying a channel flipping icon on the television content playing on the full screen.

Operation 1650 includes receiving a selection of one of an up control or a down control.

Operation 1660 includes based on receiving the selection of the up control, playing the television content of a next live television channel in the electronic program guide on the full screen.

In some examples, the techniques described herein relate to a method for automatically playing television content in a featured carousel of a television application executing on a computing device, the method including: identifying, by the television application, a plurality of live television channels providing respective television content; determining a ranked order for presenting the television content for each respective live television channel of the plurality of live television channels in the featured carousel; playing the television content for a first live television channel of the plurality of live television channels in a banner in a user interface of the television application, the first live television channel being first in the ranked order; receiving an indication to advance the featured carousel; and in response to receiving the indication to advance the featured carousel, playing the television content for a second live television channel of the plurality of live television channels in the banner in the user interface of the television application, the second live television channel being second in the ranked order.

In some examples, the techniques described herein relate to a method, further including determining a context for the user interface; and filtering instream advertisements included in the television content based on the context.

In some examples, the techniques described herein relate to a method, wherein filtering the instream advertisements includes replacing the instream advertisements with slate content.

In some examples, the techniques described herein relate to a method, further including determining a content category for the television content; and determining not to play the television content in the banner based on the content category.

In some examples, the techniques described herein relate to a method, wherein the user interface includes a full screen button; and wherein the method further includes: receiving a selection of the full screen button when the first live television channel of the plurality of live television channels is playing; and based on receiving the selection of the full screen button, seamlessly transitioning playing of the television content for the first live television channel from the banner to a full screen state.

In some examples, the techniques described herein relate to a method, wherein identifying a plurality of live television channels providing respective television content includes determining personalized recommendations of live television channels based on preferences of a user.

In some examples, the techniques described herein relate to a non-transitory computer-readable medium storing executable instructions that when executed by at least one processor of a computing device cause the at least one processor to execute operations, the operations including automatically playing television content in a featured carousel of a television application executing on the computing device, the automatic playing including: identifying, by the television application, a plurality of live television channels providing respective television content; determining a ranked order for presenting the television content for each respective live television channel of the plurality of live television channels in the featured carousel; playing the television content for a first live television channel of the plurality of live television channels in a banner in a user interface of the television application, the first live television channel being first in the ranked order; receiving an indication to advance the featured carousel; and in response to receiving the indication to advance the featured carousel, playing the television content for a second live television channel of the plurality of live television channels in the banner in the user interface of the television application, the second live television channel being second in the ranked order.

In some examples, the techniques described herein relate to a non-transitory computer-readable medium, wherein the automatic playing of the television content in the featured carousel of the television application further includes: determining a context for the user interface; and filtering instream advertisements included in the television content based on the context, the filtering including replacing the instream advertisements with slate content.

In some examples, the techniques described herein relate to a non-transitory computer-readable medium, wherein the automatic playing of the television content in the featured carousel of the television application further includes determining a content category for the television content; and determining not to play the television content in the banner based on the content category.

In some examples, the techniques described herein relate to a non-transitory computer-readable medium, wherein the user interface includes a full screen button; and wherein the automatic playing of the television content in the featured carousel of the television application further includes: receiving a selection of the full screen button when the first live television channel of the plurality of live television channels is playing; and based on receiving the selection of the full screen button, seamlessly transitioning playing of the television content for the first live television channel from the banner to a full screen state.

In some examples, the techniques described herein relate to a non-transitory computer-readable medium, wherein identifying a plurality of live television channels providing respective television content includes determining personalized recommendations of live television channels based on preferences of a user.

In some examples, the techniques described herein relate to a system including: at least one processor; and a non-transitory computer-readable medium storing instructions that when executed by the at least one processor cause the system to automatically play television content in a featured carousel of a television application executing on a computing device, the automatic playing including: identifying, by the television application, a plurality of live television channels providing respective television content; determining a ranked order for presenting the television content for each respective live television channel of the plurality of live television channels in the featured carousel; playing the television content for a first live television channel of the plurality of live television channels in a banner in a user interface of the television application, the first live television channel being first in the ranked order; receiving an indication to advance the featured carousel; and in response to receiving the indication to advance the featured carousel, playing the television content for a second live television channel of the plurality of live television channels in the banner in the user interface of the television application, the second live television channel being second in the ranked order.

In some examples, the techniques described herein relate to a system, wherein the automatic playing of the television content in the featured carousel of the television application further includes determining a context for the user interface; and filtering instream advertisements included in the television content based on the context, the filtering including replacing the instream advertisements with slate content.

In some examples, the techniques described herein relate to a system, wherein the automatic playing of the television content in the featured carousel of the television application further includes determining a content category for the television content; and determining not to play the television content in the banner based on the content category.

In some examples, the techniques described herein relate to a system, wherein the user interface includes a full screen button; and wherein the automatic playing of the television content in the featured carousel of the television application further includes: receiving a selection of the full screen button when the first live television channel of the plurality of live television channels is playing; and based on receiving the selection of the full screen button, seamlessly transitioning playing of the television content for the first live television channel from the banner to a full screen state.

In some examples, the techniques described herein relate to a system, wherein identifying a plurality of live television channels providing respective television content includes determining personalized recommendations of live television channels based on preferences of a user.

In some examples, the techniques described herein relate to a method for browsing television content in a television application executing on a computing device, the method including: presenting, by the television application, an electronic program guide in a user interface; receiving a selection of a live television channel from the electronic program guide; in response to receiving the selection, playing television content for the live television channel on a full screen of the computing device; overlaying a channel flipping icon on the television content playing on the full screen; receiving a selection of one of an up control or a down control; and based on receiving the selection of the up control, playing the television content of a next live television channel in the electronic program guide on the full screen.

In some examples, the techniques described herein relate to a method, further including, based on receiving the selection of the down control, playing the television content of a previous live television channel in the electronic program guide on the full screen.

In some examples, the techniques described herein relate to a method, wherein the electronic program guide lists live television channels in a ranked order based on preferences of a user.

In some examples, the techniques described herein relate to a method, wherein the user interface includes a more channels indicator; and wherein the method further includes receiving a selection of the more channels indicator; and based on receiving the selection, overlaying a channel hopping cluster on the television content playing on the full screen.

In some examples, the techniques described herein relate to a method, wherein the channel hopping cluster includes a ranked order of live television channels available for playing television content represented by respective channel icons.

In some examples, the techniques described herein relate to a method, further including receiving a selection of a channel icon included in the channel hopping cluster; and in response to receiving the selection of the channel icon, playing the television content for the live television channel represented by the channel icon on the full screen.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a non-transitory machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or non-transitory medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In this specification and the appended claims, the singular forms "a," "an" and "the" do not exclude the plural reference unless the context clearly dictates otherwise. Further, conjunctions such as "and," "or," and "and/or" are inclusive unless the context clearly dictates otherwise. For example, "A and/or B" includes A alone, B alone, and A with B. Further, connecting lines or connectors shown in the various figures presented are intended to represent example functional relationships and/or physical or logical couplings between the various elements. Many alternative or additional functional relationships, physical connections or logical connections may be present in a practical device. Moreover, no item or component is essential to the practice of the embodiments disclosed herein unless the element is specifically described as "essential" or "critical".

Terms such as, but not limited to, approximately, substantially, generally, etc. are used herein to indicate that a precise value or range thereof is not required and need not be specified. As used herein, the terms discussed above will have ready and instant meaning to one of ordinary skill in the art.

Moreover, use of terms such as up, down, top, bottom, side, end, front, back, etc. herein are used with reference to a currently considered or illustrated orientation. If they are considered with respect to another orientation, it should be understood that such terms must be correspondingly modified.

Further, in this specification and the appended claims, the singular forms "a," "an" and "the" do not exclude the plural reference unless the context clearly dictates otherwise. Moreover, conjunctions such as "and," "or," and "and/or" are inclusive unless the context clearly dictates otherwise. For example, "A and/or B" includes A alone, B alone, and A with B.

Although certain example methods, apparatuses and articles of manufacture have been described herein, the scope of coverage of this patent is not limited thereto. It is to be understood that terminology employed herein is for the purpose of describing particular aspects and is not intended to be limiting. On the contrary, this patent covers all methods, apparatus and articles of manufacture fairly falling within the scope of the claims of this patent.

Further to the descriptions above, a user may be provided with controls allowing the user to make an election as to both if and when systems, programs, or features described herein may enable collection of user information (e.g., a user's preferences, a user's current location, a user's credentials, etc.), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

The specification includes the following subject-matter expressed in the form of clauses 1-22.
1. A method for automatically playing television content in a featured carousel of a television application executing on a computing device, the method comprising:
   identifying, by the television application, a plurality of live television channels providing respective television content;
   determining a ranked order for presenting the television content for each respective live television channel of the plurality of live television channels in the featured carousel;
   playing the television content for a first live television channel of the plurality of live television channels in a banner in a user interface of the television application, the first live television channel being first in the ranked order;
   receiving an indication to advance the featured carousel; and
   in response to receiving the indication to advance the featured carousel, playing the television content for a second live television channel of the plurality of live television channels in the banner in the user interface of the television application, the second live television channel being second in the ranked order.
2. The method of clause 1, further comprising:
   determining a context for the user interface; and
   filtering instream advertisements included in the television content based on the context.
3. The method of clause 2, wherein filtering the instream advertisements comprises replacing the instream advertisements with slate content.
4. The method of any of clauses 1-3, further comprising:
   determining a content category for the television content; and
   determining not to play the television content in the banner based on the content category.
5. The method of any of clauses 1-4,
   wherein the user interface includes a full screen button; and
   wherein the method further comprises:
      receiving a selection of the full screen button when the first live television channel of the plurality of live television channels is playing; and
      based on receiving the selection of the full screen button, seamlessly transitioning playing of the television content for the first live television channel from the banner to a full screen state.
6. The method of any of clauses 1-5, wherein identifying a plurality of live television channels providing respective television content comprises determining personalized recommendations of live television channels based on preferences of a user.
7. A non-transitory computer-readable medium storing executable instructions that when executed by at least one processor of a computing device cause the at least one processor to execute operations, the operations comprising automatically playing television content in a featured carousel of a television application executing on the computing device, the automatic playing comprising:
   identifying, by the television application, a plurality of live television channels providing respective television content;
   determining a ranked order for presenting the television content for each respective live television channel of the plurality of live television channels in the featured carousel;
   playing the television content for a first live television channel of the plurality of live television channels in a banner in a user interface of the television application, the first live television channel being first in the ranked order;
   receiving an indication to advance the featured carousel; and
   in response to receiving the indication to advance the featured carousel, playing the television content for a second live television channel of the plurality of live television channels in the banner in the user interface of the television application, the second live television channel being second in the ranked order.
8. The non-transitory computer-readable medium of clause 7, wherein the automatic playing of the television content in the featured carousel of the television application further comprises:
   determining a context for the user interface; and
   filtering instream advertisements included in the television content based on the context, the filtering comprising replacing the instream advertisements with slate content.
9. The non-transitory computer-readable medium of clause 7 or 8, wherein the automatic playing of the television content in the featured carousel of the television application further comprises:
   determining a content category for the television content; and
   determining not to play the television content in the banner based on the content category.
10. The non-transitory computer-readable medium of any of clauses 7-9,
   wherein the user interface includes a full screen button; and
   wherein the automatic playing of the television content in the featured carousel of the television application further comprises:
      receiving a selection of the full screen button when the first live television channel of the plurality of live television channels is playing; and
      based on receiving the selection of the full screen button, seamlessly transitioning playing of the television content for the first live television channel from the banner to a full screen state.
11. The non-transitory computer-readable medium of any of clauses 7-10, wherein identifying a plurality of live television channels providing respective television content comprises determining personalized recommendations of live television channels based on preferences of a user.
12. A system comprising:
   at least one processor; and
   a non-transitory computer-readable medium storing instructions that when executed by the at least one processor cause the system to automatically play television content in a featured carousel of a television application executing on a computing device, the automatic playing comprising:
      identifying, by the television application, a plurality of live television channels providing respective television content;
      determining a ranked order for presenting the television content for each respective live television channel of the plurality of live television channels in the featured carousel;
      playing the television content for a first live television channel of the plurality of live television channels in a banner in a user interface of the television application, the first live television channel being first in the ranked order;
      receiving an indication to advance the featured carousel; and
      in response to receiving the indication to advance the featured carousel, playing the television content for a second live television channel of the plurality of live television channels in the banner in the user interface of the television application, the second live television channel being second in the ranked order.
13. The system of clause 12, wherein the automatic playing of the television content in the featured carousel of the television application further comprises:
   determining a context for the user interface; and
   filtering instream advertisements included in the television content based on the context, the filtering comprising replacing the instream advertisements with slate content.
14. The system of clause 12 or 13, wherein the automatic playing of the television content in the featured carousel of the television application further comprises:
   determining a content category for the television content; and
   determining not to play the television content in the banner based on the content category.
15. The system of any of clauses 12-14,
   wherein the user interface includes a full screen button; and
   wherein the automatic playing of the television content in the featured carousel of the television application further comprises:
      receiving a selection of the full screen button when the first live television channel of the plurality of live television channels is playing; and
      based on receiving the selection of the full screen button, seamlessly transitioning playing of the television content for the first live television channel from the banner to a full screen state.
16. The system of any of clauses 12-15, wherein identifying a plurality of live television channels providing respective television content comprises determining personalized recommendations of live television channels based on preferences of a user.
17. A method for browsing television content in a television application executing on a computing device, the method comprising:
   presenting, by the television application, an electronic program guide in a user interface;
   receiving a selection of a live television channel from the electronic program guide;
   in response to receiving the selection, playing television content for the live television channel on a full screen of the computing device;
   overlaying a channel flipping icon on the television content playing on the full screen;
   receiving a selection of one of an up control or a down control; and
   based on receiving the selection of the up control, playing the television content of a next live television channel in the electronic program guide on the full screen.
18. The method of clause 17, further comprising:
   based on receiving the selection of the down control, playing the television content of a previous live television channel in the electronic program guide on the full screen.
19. The method of clause 17 or 18, wherein the electronic program guide lists live television channels in a ranked order based on preferences of a user.
20. The method of any of clauses 17-19,
   wherein the user interface includes a more channels indicator; and
   wherein the method further comprises:
      receiving a selection of the more channels indicator; and
      based on receiving the selection, overlaying a channel hopping cluster on the television content playing on the full screen.
21. The method of clause 20, wherein the channel hopping cluster includes a ranked order of live television channels available for playing television content represented by respective channel icons.
22. The method of clause 21, further comprising:
   receiving a selection of a channel icon included in the channel hopping cluster; and
   in response to receiving the selection of the channel icon, playing the television content for the live television channel represented by the channel icon on the full screen.

## Claims

1. A method for automatically playing television content in a featured carousel of a television application executing on a computing device, the method comprising:
identifying, by the television application, a plurality of live television channels providing respective television content;
determining a ranked order for presenting the television content for each respective live television channel of the plurality of live television channels in the featured carousel;
playing the television content for a first live television channel of the plurality of live television channels in a banner in a user interface of the television application, the first live television channel being first in the ranked order;
receiving an indication to advance the featured carousel; and
in response to receiving the indication to advance the featured carousel, playing the television content for a second live television channel of the plurality of live television channels in the banner in the user interface of the television application, the second live television channel being second in the ranked order.

2. The method of claim 1, further comprising:
determining a context for the user interface; and
filtering instream advertisements included in the television content based on the context.

3. The method of claim 2, wherein filtering the instream advertisements comprises replacing the instream advertisements with slate content.

4. The method of any of claims 1-3, further comprising:
determining a content category for the television content; and
determining not to play the television content in the banner based on the content category.

5. The method of any preceding claim,
wherein the user interface includes a full screen button; and
wherein the method further comprises:
receiving a selection of the full screen button when the first live television channel of the plurality of live television channels is playing; and
based on receiving the selection of the full screen button, seamlessly transitioning playing of the television content for the first live television channel from the banner to a full screen state.

6. The method of any preceding claim, wherein identifying a plurality of live television channels providing respective television content comprises determining personalized recommendations of live television channels based on preferences of a user.

7. A non-transitory computer-readable medium storing executable instructions that when executed by at least one processor of a computing device cause the at least one processor to execute operations, the operations comprising the method of any of claims 1-6.

8. A system comprising:
at least one processor; and
a non-transitory computer-readable medium storing instructions that when executed by the at least one processor cause the system to perform the method of any of claims 1-6.

9. A method for browsing television content in a television application executing on a computing device, the method comprising:
presenting, by the television application, an electronic program guide in a user interface;
receiving a selection of a live television channel from the electronic program guide;
in response to receiving the selection, playing television content for the live television channel on a full screen of the computing device;
overlaying a channel flipping icon on the television content playing on the full screen;
receiving a selection of one of an up control or a down control; and
based on receiving the selection of the up control, playing the television content of a next live television channel in the electronic program guide on the full screen.

10. The method of claim 9, further comprising:
based on receiving the selection of the down control, playing the television content of a previous live television channel in the electronic program guide on the full screen.

11. The method of claim 9 or 10, wherein the electronic program guide lists live television channels in a ranked order based on preferences of a user.

12. The method of any of claims 9-11,
wherein the user interface includes a more channels indicator; and
wherein the method further comprises:
receiving a selection of the more channels indicator; and
based on receiving the selection, overlaying a channel hopping cluster on the television content playing on the full screen.

13. The method of claim 12, wherein the channel hopping cluster includes a ranked order of live television channels available for playing television content represented by respective channel icons.

14. The method of claim 13, further comprising:
receiving a selection of a channel icon included in the channel hopping cluster; and
in response to receiving the selection of the channel icon, playing the television content for the live television channel represented by the channel icon on the full screen.

15. A non-transitory computer-readable medium storing executable instructions that when executed by at least one processor of a computing device cause the at least one processor to execute operations, the operations comprising the method of any of claims 9-14.
